## Europäisches Patentamt
## European Patent Office
## Office européen des brevets

(19)

(11) Veröffentlichungsnummer: **0 134 254**
**B1**

(12) # EUROPÄISCHE PATENTSCHRIFT

(45) Veröffentlichungstag der Patentschrift:
**20.11.86**

(51) Int. Cl.⁴: **C 04 B 35/56**

(21) Anmeldenummer: **83107469.5**

(22) Anmeldetag: **29.07.83**

(54) **Verfahren zur Herstellung von Formkörpern aus Silicium infiltriertem, reaktionsgebundenem Siliciumcarbid.**

(43) Veröffentlichungstag der Anmeldung:
**20.03.85 Patentblatt 85/12**

(45) Bekanntmachung des Hinweises auf die Patenterteilung:
**20.11.86 Patentblatt 86/47**

(84) Benannte Vertragsstaaten:
**AT CH DE FR GB LI NL SE**

(56) Entgegenhaltungen:
**EP - A - 0 064 606**
**DE - A - 1 671 180**
**DE - A - 2 707 299**
**DE - A - 2 910 628**
**GB - A - 2 062 600**

(73) Patentinhaber: **Hoechst CeramTec Aktiengesellschaft,
Wilhelmstrasse 14, D-8672 Selb (DE)**

(72) Erfinder: **Pollak, Werner, Dipl.-Ing., Plössberger Weg,
D-8672 Selb/Bayern (DE)**
Erfinder: **Specht, Gerhard, Friedrich-Heinrich-Strasse 9,
D-8672 Selb/Bayern (DE)**
Erfinder: **Blecha, Michael, Dr. Dipl.-Chem., Nopler
Strasse 13, A-7344 Stoob (AT)**

(74) Vertreter: **Reuter, Johann-Heinrich, Dr. et al, HOECHST
AKTIENGESELLSCHAFT Zentrale Patentabteilung
Postfach 80 03 20, D-6230 Frankfurt/Main 80 (DE)**

## Beschreibung

Die vorliegende Erfindung betrifft ein Verfahren zur Herstellung von Formkörpern aus Silicium infiltriertem, reaktionsgebundenem Siliciumcarbid (SiSiC) für Anwendungen im Apparatebau, insbesondere Gleitringen und Wärmetauschern, wobei die porösen Formkörper aus einem Gemisch von Siliciumcarbid und Kohlenstoff bestehen und in Vakuum in Gegenwart von Silicium über die Schmelztemperatur von elementarem Silicium bei Temperaturen über 1410° C erhitzt werden, wobei die Haltezeit 0,5 bis 6 Stunden beträgt.

In der DE-A-29 10 628 wird die Infiltration von porösen Formkörpern aus einem Silicium-Kohlenstoff-Gemisch unter Verwendung von siliciumhaltigen Speisern beschrieben. Diese Speiser werden aus einem Gemisch von Kohlenstoff und Silicium hergestellt, wobei das Silicieren beim Erhitzen mit dem Kohlenstoff ein Gerüst aus neugebildetem Siliciumcarbid bildet und das überschüssig gespeicherte und geschmolzene Silicium in den zu infiltrierenden Formkörper geleitet wird. Die danach poröse SiC-Matrix der Speiser lässt sich nach dem Brand leicht ablösen. Dabei ist es wünschenswert, dass bei der Silicierung der Siliciumcarbid-Kohle-Pressling unten und der Silicium-Kohle-Pressling als Speiser oben liegt, weil diese Art der Anordnung ein Einfliessen des geschmolzenen Siliciums in den Siliciumcarbid-Kohle-Pressling und sein Durchdringen sowohl aufgrund der Kapillarwirkung als auch aufgrund der Schwerkraft begünstigt. Der Nachteil dieser Methode ist, dass extra eine Masse aus Silicium und Kohle hergestellt und zu einem Speiser verpresst werden muss, der nach Gebrauch nicht wieder benutzt werden kann. Eine Variation der Speiserherstellung besteht darin, dass das Silicium-Kohle-Gemisch für die Durchführung des Silicierungsverfahrens in loser Pulverform benutzt wird. Man schüttet dann die gewünschte Menge in den und um den Siliciumcarbid-Kohle-Pressling. Für die Durchführung dieser beiden Methoden wird feinkörniges Silicium und Kohle gemischt. Als nachteilig hat sich erwiesen, dass durch das sehr feine Silicium mit einer durchschnittlichen Korngrösse von 75 μm Verunreinigungen eingeschleppt werden, die dann später zu Fehlern, insbesondere zu Rissen, im fertig silicierten Formkörper führen können.

Um die Schlagfestigkeit von SiSiC-Formkörpern zu verbessern, gibt man gemäss der DE-A-2707299 dem Formkörper aus einem Gemisch von Siliciumcarbid und Kohlenstoff noch Bornitrid in Anteilen von 10 bis 55% zu, das mit geschmolzenem Silicium im wesentlichen nicht reagiert. Die Silicierung erfolgt so, indem dieser Formkörper in eine Form mit später geschmolzenem Silicium gestellt wird. Die Infiltration von geschmolzenem Silicium erfolgt bei Temperaturen über 1410° C durch Dochte, die aus Kohlefasern bestehen. Als Entformungsmittel kann beispielsweise Bornitrid verwendet werden. Als Nachteil dieses Verfahrens muss die sehr aufwendige Herstellung der Graphitform und des Dochtmaterials angesehen werden, die es für die Massenfertigung von Formkörpern unwirtschaftlich machen.

Eine weitere Schwierigkeit beim Silicieren ergibt sich aus der DE-A-2644503, weil das handelsübliche Siliciumcarbidpulver immer etwas Siliciumdioxid enthält. Dieses Siliciumdioxid wird durch geschmolzenes Siliciummetall nicht benetzt, so dass eine Silicierung bei Gegenständen mit einem derartigen Material immer schwierig ist. Bei diesem Verfahren wird der poröse Gegenstand in Abwesenheit von Sauerstoff auf die Silicierungstemperatur oberhalb der Schmelztemperatur von Silicium erhitzt. Danach wird der Gegenstand in einer Gasumgebung, die im wesentlichen aus Stickstoff mit 0 bis 10%, vorzugsweise 3 bis 7%, und darin enthaltenem Wasserstoff besteht, gehalten. Bei dieser zweifachen Gasbehandlung reagiert der Stickstoff und der Wasserstoff mit sämtlichen im Siliciumcarbid vorhandenen Oxiden des Siliciums und überführt diese in Siliciumnitrid. Der Stickstoff reagiert auch mit den sauberen Siliciumoberflächen unter Bildung von Siliciumnitrid. Diese zweifache Gasbehandlung bewirkt einmal eine Reinigung des Gegenstandes durch Entfernung der Oxide des Siliciums und stellt andererseits sicher, dass ein ausreichendes Porenvolumen innerhalb des Formkörpers zur Verfügung steht, indem der Kohlenstoff im Siliciumcarbid in einer Weise umgewandelt wird, der die Porenstruktur des Gegenstandes nicht vorzeitig verschliesst. Diese stickstoffhaltige Umgebung wird abgesetzt, wenn die Silicierungstemperatur erreicht ist, so dass Siliciummetall in den Formkörper über das Porengerüst fliesst und rasch den verfügbaren Kohlenstoff und vorhandenen Graphit des Gegenstandes durchdringt. Liegt eine Stickstoffumgebung in der Brennkammer vor, reagiert der Stickstoff mit dem flüssigen Siliciummetall unter Bildung einer darüber ausgebildeten Siliciumnitridhaut, welche jegliche Durchdringung des porösen Formkörpers durch Silicium behindert.

Grundsätzlich haben alle aus der Literatur bekannten Verfahren zur Herstellung von infiltriertem Siliciumcarbid den Nachteil, dass beim Erstarren des Siliciums dieses aus dem Formkörper austritt und dessen Oberfläche grossflächig benetzt und häufig zu Verklebungen mit den Brennhilfsmitteln führt. Als Folge davon entstehen beim Lösen der Formkörper von der Brennunterlage Beschädigungen am Bauteil. Auch der oft erhebliche mechanische oder chemische Reinigungsaufwand für die mit Silicium bedeckten Oberflächen ist zudem äusserst unwirtschaftlich.

Aufgabe der Erfindung ist einmal die Schaffung einer Anordnung bei einem Silicierungsverfahren, bei dem sich der mit Silicium infiltrierte Siliciumcarbid-Körper nach dem Brand gut von der Brennunterlage ablöst und eine gleichmässige Verteilung des geschmolzenen Siliciums im Formkörper bewirkt, wobei die Anordnung wieder verwendbar sein soll als auch die Atmosphärenführung so geführt werden soll, dass das ausgeschwitzte Silicium nur schwach am durchsilicierten Körper anhaftet.

Die Lösung der Teilaufgabe hinsichtlich der Vorrichtung bei einem Verfahren zur Herstellung von Formkörpern aus Silicium infiltriertem, reaktionsgebundenen Siliciumcarbid besteht darin, dass poröse, aus einem Gemisch von Siliciumcarbid und Kohlenstoff bestehende Formkörper auf eine Anordnung gelegt werden, die aus einer mit Bornitrid beschichteten Graphitplatte, einer mit Silicium infiltrierten und mit einem Gemisch aus Bornitrid, Siliciumcarbid und Kohlenstoff beschichteten porösen Platte aus Siliciumcarbid und einer zwischen den beiden Platten eingebrachten Schicht aus stückigem, metallischem Silicium besteht. Um diese vorteilhafte Vorrichtung noch hinsichtlich des leichteren Entfernens des anhaftenden Siliciums zu unterstützen, ist eine Atmosphärenführung zweckmässig, die vorsieht, dass nach dem Ende der Haltezeit die mit Silicium infiltrierten Siliciumcarbid-Formkörper in einer Stickstoffatmosphäre bei Drücken von 0,05 bis 1 bar abgekühlt werden.

Die Bornitridbeschichtung auf der Grundplatte bewirkt, dass die Benetzung und mögliche Umwandlung der Graphitplatte durch das geschmolzene Silicium verhindert wird. Die Auflageplatte nimmt das geschmolzene Silicium auf und leitet es in den zu silicierenden porösen Formkörper. Dabei hat die Beschichtung aus Bornitrid, Kohlenstoff und Siliciumcarbid eine regulierende Wirkung auf den Siliciumstrom.

Das Abkühlen mit Silicium infiltrierten Formkörper in stickstoffhaltiger Atmosphäre bewirkt, dass zwar als Folge der Volumenvergrösserung von erstarrendem Silicium aus dem Formkörper Silicium austritt, aber durch die sich bildende Nitridhaut daran gehindert wird, die Formkörperoberfläche grossflächig zu benetzen. Daher lassen sich die bei dem erfindungsgemässen Verfahren gebildeten Ausschwitzungen von Silicium nach der Entnahme aus dem Ofen vom Formkörper leicht entfernen. Somit ergeben sich weniger Abplatzungen am Formkörper beim Reinigen der Oberfläche, was die Ausschussraten senkt und das Verfahren gegenüber den bekannten Methoden wirtschaftlicher macht. Ausserdem wird durch die Verwendung von grobkörnigem, metallischem Silicium vermieden, dass allzu grosse Mengen von Verunreinigungen an der Oberfläche des Silicums in das Verfahren hineingetragen werden. Insbesondere ergibt sich ein verbessertes Silicierungsverfahren mit dieser Art der Siliciumschüttung als auch durch die spezielle Atmosphärenführung mit Stickstoff.

Weitere Ausgestaltungen ergeben sich aus den Unteransprüchen, indem sich als besonders vorteilhaft eine Beschichtung aus 2 Gewichtsteilen Kohlenstoff, 3 Gewichtsteilen Bornitrid und 5 Gewichtsteilen Siliciumcarbid erwiesen hat. Die aufgestreuten Granulatkörper vermitteln ferner eine punktförmige Auflage und erleichtern zusammen mit der Beschichtung das Ablösen der infiltrierten Formkörper von der Auflageplatte.

Eine andere Möglichkeit, die Auflageplatte herzustellen, besteht darin, dass ein Gemisch von Silicium und Siliciumcarbid gegossen oder gepresst wird, wobei Kohlenstoff anwesend sein muss.

Weitere Einzelheiten und vorteilhafte Weiterbildungen des erfindungsgemässen Verfahrens sowie der erfindungsgemässen Anordnung zum Durchsilicieren von porösen Formkörpern aus einem Siliciumcarbid-Kohlenstoffgemisch ergibt sich aus dem folgenden Ausführungsbeispiel, und zwar für die Herstellung von Gleitringen.

*Beispiel :*

Für die Durchführung des erfindungsgemässen Verfahrens wird ein Formkörper für einen Gleitring hergestellt, indem man 84 Gew.-% hexagonales Siliciumcarbid einer konventionellen Schleifmittelqualität mit einer mittleren Korngrösse von 9 µm und 8 Gew.-% Graphit von einer Korngrösse von ca. 3 µm als auch 9 Gew.-% Phenolharz mit einem Verkokungsrückstand von 50% mischt, wobei das Phenolharz im Verhältnis 1:3 in Alkohol gelöst ist. Das Lösungsmittel aus diesem zähflüssigen Brei wird durch Vakuumverdampfung entfernt und durch Sieben der getrockneten Mischung ein Granulat von 0 bis 0,6 mm hergestellt. Das Granulat wird mit 2000 bar zu einem Ring mit einem Durchmesser von 80 mm und einer Höhe von 10 mm gepresst. Sein Gewicht liegt bei 98 g und die Pressdichte des Rohlings beträgt dabei 2,0 g/cm³. Nach dem Verkoken bei einer Haltezeit von 5 Stunden und 1000° C besteht der Pressling aus 13 Gew.-% reinem Kohlenstoff und 87 Gew.-% Siliciumcarbid, wobei die verbleibenden Bestandteile des Phenolharzes den Siliciumkörper zusammenhalten. Im verkokten Zustand beträgt die Dichte 1,97 g/cm³.

Die erfindungsgemässe Anordnung zum Silicieren des Formkörpers wird wie folgt vorbereitet: Eine Grundplatte aus handelsüblichem, feinkörnigem Graphit wird mit einer Suspension von Bornitridpulver in Wasser bestrichen und getrocknet. Eine poröse Auflageplatte aus Siliciumcarbid wird in einem separaten Brand mit Silicium getränkt und im Ofen abgekühlt. Nach Entnahme aus dem Ofen wird die Auflagefläche gereinigt, geglättet und mit einer Alkohol-Suspension aus einer Mischung von 2 Gewichtsteilen Kohlenstoff, 3 Gewichtsteilen Bornitrid und 5 Gewichtsteilen Siliciumcarbid bestrichen und getrocknet. Auf die Beschichtung wird ein Granulat mit einer Korngrösse von 0,5 bis 1 mm aus einer Mischung von Siliciumcarbid und Kohlenstoff aufgestreut. Für den Infiltrationsprozess wird stückiges Siliciummetall mit einer Korngrösse von 3 bis 10 mm in der für die vollständige Infiltration des Formkörpers notwendigen Menge auf die beschichtete Graphitplatte gelegt, mit der beschichteten und getränkten Siliciumcarbidplatte abgedeckt und die verkokten Formkörper aufgelegt. Durch Aufheizen mit ca. 300° C/Std. auf 1600° C in einem Vakuum von 1 Torr werden die Formkörper gleichmässig mit Silicium infiltriert und der vorhandene Kohlenstoff in SiC umgewandelt. Nach einer Haltezeit von 6 Stunden wird die Vakuumpumpe abgeschaltet und Stickstoff bis zu einem Druck von 0,05 bis 1 bar in den Ofenraum eingelassen. Bei diesem Verfahren entsteht ein Formkörper mit einer Dichte von grösser 3,10 g/cm³, der durch den speziellen Prozess zu 84 Gew.-% aus Siliciumcarbid mit einer max. Korngrösse von 13 µm und zu 16 Gew.-% aus Silicium besteht, das die Hohlräume zwischen den Siliciumcarbidkristallen ausfüllt.

Im Anschliff sind bei 800facher Vergrösserung keine Kohlenstoffreste und keine Poren zu erkennen. Die Biegefestigkeit, gemessen mit einer 4-Punkt-Auflage 40/20 mm, wurde an aus der Platte geschnittenen Prüfstäben von 4,5 × 3,5 × 50 mm zu 400 N/mm² bestimmt.

Beim Abkühlen in Gegenwart von Stickstoff bilden sich auf der Formkörperoberfläche als Folge der entstehenden Nitridhaut Siliciumperlen aus, die durch mechanische Nachbearbeitung leicht entfernbar sind. Auch durch den Bornitridgehalt der Plattenbeschichtung werden mechanische Beschädigungen vermieden, da der Formkörper an der Brennunterlage nicht mehr so fest anhaftet.

Weitere Vorteile des erfindungsgemässen Verfahrens bestehen darin, dass die Silicium-Speiseherstellung enfällt und dadurch auch die Ofenkapazität besser genutzt wird. Da bei dieser Methode auch weniger Ausschwitzungen vom Silicium an der Oberfläche auftreten und sich keine Speiserreste mehr am Formkörper befinden, erhält man kürzere Sandstrahlzeiten und einen geringen Schleifaufwand am Gleitring. Neben einer zusätzlichen Rohstoffersparnis am Silicium ergibt sich auch eine saubere Brennatmosphäre, da weniger Harze und Lösungsmittel in den Ofen gebracht werden, was sich wiederum positiv auf die Lebensdauer der Vakuumpumpe auswirkt.

## Patentansprüche

1. Verfahren zur Herstellung von Formkörpern aus Silicium infiltriertem, reaktionsgebundenem Siliciumcarbid (SiSiC) für Anwendungen im Apparatebau, insbesondere Gleitringen und Wärmetauschen, wobei poröse aus einem Gemisch von Siliciumcarbid und Kohlenstoff bestehende Formkörper in Vakuum in Gegenwart von Silicium über die Schmelztemperatur von elementarem Silicium bei Temperaturen über 1410°C erhitzt werden, wobei die Haltezeit 0,5 bis 6 Stunden beträgt, dadurch gekennzeichnet, dass die Formkörper auf eine Anordnung aufgelegt werden, die aus einer mit Bornitrid beschichteten Graphitplatte, einer mit Silicium infiltrierten und mit einem Gemisch aus Bornitrid, Siliciumcarbid und Kohlenstoff beschichteten porösen Platte aus Siliciumcarbid und einer zwischen den beiden Platten eingebrachten Schicht aus stückigem, metallischem Silicium besteht und nach dem Ende der Haltezeit die mit Silicium infiltrierten Siliciumcarbid-Formkörpern in einer Stickstoffatmosphäre bei Drücken von 0,05 bis 1 bar abgekühlt werden.

2. Verfahren nach Anspruch 1, dadurch gekennzeichnet, dass die Auflageplatte ursprünglich eine poröse Siliciumcarbidplatte ist, in die metallisches Silicium infiltriert wurde und die Beschichtung aus einem Gemisch von 2 Gewichtsteilen Kohlenstoff, 3 Gewichtsteilen Bornitird und 5 Gewichtsteilen Siliciumcarbid besteht als auch auf diese Beschichtung ein Granulat aus einer Mischung von Siliciumcarbid und Kohlenstoff aufgestreut wird.

3. Verfahren nach Anspruch 1, dadurch gekennzeichnet, dass die Auflageplatte aus einem Gemisch von Silicium und Siliciumcarbid in Gegenwart von Kohlenstoff hergestellt wird.

## Claims

1. Process for the preparation of molded bodies of silicon-infiltrated, reaction-bonded silicon carbide (SiSiC) for applications in machine building, particularly in the building of sliding rings and heat exchangers, by heating poruns molded bodies consisting of a mixture of silicon carbide and carbon in a vacuum in the presence of silicon to a temperature higher than the melting temperature of elemental silicon (above 1410°C) for a holding time of from 0.5 to 6 hours, comprising the steps of placing the molded bodies onto an arrangement comprising a graphite plate coated with boron nitride, a porous silicon carbide plate which is infiltrated with silicon and coated with a mixture of boron nitride, silicon, carbide and carbon and a layer arranged between said plates and consisting of lumpy metallic silicon and cooling the molded silicon carbide bodies infiltrated with silicon at the end of the holding time in a nitrogen atmosphere under a pressure of 0.05 to 1 bar.

2. A process according to claim 1, wherein the support plate comprises an originally porous silicon carbide plate into which metallic silicon has been infiltrated and the coating comprises a mixture of 2 parts by weight carbon, 3 parts by weight boron nitride and 5 parts by weight silicon carbide, and further comprising a mixture of silicon carbide and carbon granules scattered thereon.

3. A process according to claim 1, wherein the support plate is made from a mixture of silicon and silicon carbide in the presence of carbon.

## Revendications

1. Procédé pour préparer des objets moulés en carbure de silicium comportant une infiltration de silicium liée par réaction (SiSiC) pour des applications dans des constructions d'appareils, en particulier des anneaux de glissement et des échangeurs de chaleur, selon lequel des objets moulés poreux, consistant en un mélange de carbure de silicium et de carbone sont chauffés sous vide en présence de silicium au-delà de la température de fusion du silicium élémentaire à des températures supérieures à 1410°C, le temps de séjour étant de 0,5 à 6 heures, procédé caractérisé en ce que les objets moulés sont placés sur un agencement consistant en une plaque de graphite revêtue de nitrure de bore, une plaque poreuse en carbure de silicium comportant une infiltration de silicium et revêtue d'un mélange de nitrure de bore, de carbure de silicium et de carbone et en une couche de silicium «métallique» (élémentaire) introduite entre les deux plaques et en ce que, après la fin du temps de séjour, les objets moulés en carbure de silicium comportant une infiltration de silicium sont refroidis en atmosphère d'azote sous des pressions de 0,05 à 1 bar.

2. Procédé selon la revendication 1, caractérisé en ce que la plaque de support est primitivement une plaque de carbure de silicium poreux dans laquelle du silicium «métallique» a été infiltré et en ce que le revêtement consiste en un mélange de 2 parties en poids de carbone, 3 parties en poids de nitrure de bore et 5 parties en poids de carbure de silicium et en ce que l'on a répandu sur ce revêtement des granulés constitués d'un mélange de carbure de silicium et de carbone.

3. Procédé selon la revendication 1, caractérisé en ce que la plaque de support est réalisée en un mélange de silicium et de carbure de silicium en présence de carbone.